# EUROPÄISCHE PATENTANMELDUNG

(11) **EP 2 463 649 A1**
(43) Veröffentlichungstag der Anmeldung: **13.06.2012**
(21) Anmeldenummer: 11191883.5
(22) Anmeldetag: 05.12.2011
(51) Int. Cl.: G01N 30/00

(54) **Flachkanaldichtung**

(30) Priorität: 09.12.2010 DE 102010062773
(71) Anmelder: Wyatt Technology Europe Gmbh, 56307 Dernbach (DE)
(72) Erfinder: Rösch, Ulrich, 56317 Urbach (DE); Jevdokimov, Wladimir, 56072 Koblenz (DE)
(74) Vertreter: Eisenführ, Speiser & Partner

(57) **Zusammenfassung**

Die Erfindung betrifft eine Kanaleinhausung für eine Vorrichtung zur Feld-Fluss-Fraktionierung, mittels welcher bei der Fraktionierung von Fluiden eine Abdichtung eines Kanals (20) gegenüber der Umgebung und gegenüber einer Trenn-Membran (40) erfolgen kann. Die Kanaleinhausung weist ein erstes (10) und zweites Kanalgehäuseteil (70) auf, welche im zusammengebauten Zustand miteinander verbunden sind, insbesondere mit einer gewissen Vorspannung miteinander verschraubt sind, und welche dann die Membran (40) dichtend umgeben. Die Membran (40) grenzt in Einbaulage mit ihrer oberen Oberfläche an das erste Kanalgehäuseteil (10) an, und in diesem Bereich stellt das erste Kanalgehäuseteil (10) in einem ersten Dichtbereich (11 a) eine innere Abdichtung durch eine flächige Berührung mit der Membran (40) her. Eine äußere Abdichtung liegt im zusammengebauten Zustand in einem Bereich zwischen dem ersten Kanalgehäuseteil (10) und dem zweiten Kanalgehäuseteil (70) vor, insbesondere in einem zweiten Dichtbereich (11b) zwischen einer ersten Dichtfläche (121) am ersten Kanalgehäuseteil (10) und einer zweiten Dichtfläche (71) an dem zweiten Kanalgehäuseteil (70). Die äußere Abdichtung kann z.B. mittels eines Dichtelements (60) in diesem Bereich sichergestellt werden. Mit Hilfe der erfindungsgemäßen Kanaleinhausung kann eine einfache Montage der Membran (40) und auch der Kanaleinhausung selbst erfolgen, und die Wirkungen bzw. die Druckverhältnisse bei der inneren Abdichtung können durch weitgehend die konstruktive Gestaltung der Kanaleinhausung festgelegt und im Voraus definiert werden. Die innere Abdichtung kann dabei auch weitgehend von einer zwischen erstem (10) und zweitem Kanalgehäuseteil (70) aufzubringenden Verbindungskraft entkoppelt werden.

## Beschreibung

Die Erfindung betrifft eine Kanaleinhausung, insbesondere zur Bildung eines Kanals in Vorrichtungen zur Feld-Fluss-Fraktionierung (FFF) oder zur asymmetrischen Fluss-Feld-Fluss-Fraktionierung (AF4), mit einem, vorzugsweise plattenförmigen, ersten Kanalgehäuseteil und einem, vorzugsweise plattenförmigen, zweiten Kanalgehäuseteil, wobei die beiden Kanalgehäuseteile in einem zusammengebauten Zustand übereinander liegen und zwischen sich einen, vorzugsweise als Flachkanal ausgebildeten, Kanal bilden, der an einer ersten Seite durch eine zwischen den beiden Kanalgehäuseteilen nach außen abgedichtet angeordneten Membran begrenzt ist und dadurch ein Trennvolumen zwischen dem ersten Kanalgehäuseteil und der Membran festlegt.

Solche Kanaleinhausungen werden beispielsweise zur Abdichtung eines kanalartigen Hohlraums vorgesehen, wobei z.B. bei der Feld-Fluss-Fraktionierung (FFF) oder der asymmetrischen Fluss-Feld-Fluss-Fraktionierung (AF4) eine Fraktionierung von Fluiden in dem Kanal erfolgt, welcher von einem plattenartigen Bauteil und einer Membran begrenzt wird. Die Fraktionierung eines Fluids ist dabei umso genauer und das Messergebnis umso aussagekräftiger, je besser der Kanal abgedichtet werden kann, und zwar zum einen gegenüber der Umgebung, zum anderen gegenüber einzelnen Komponenten der Kanaleinhausung.

Bekannte Kanaleinhausungen sind üblicherweise derart aufgebaut, dass sie im zusammengebauten Zustand eine Mehrzahl an zur Fraktionierung erforderlichen Teilen bzw. Elementen in übereinander angeordneter Lage aufweisen. Gewöhnlich wird in ein als eine Art Unterteil ausgebildetes unteres Gehäuseteil eine O-Ring-Dichtung eingelegt und dann eine Fritte auf das untere Gehäuseteil und auf die Fritte eine Trenn-Membran gelegt. Darüber wird dann eine Spacerfolie angeordnet, die einen ausgeschnittenen oder ausgestanzten Bereich aufweist. Der ausgeschnittene Bereich der Spacerfolie bildet zusammen mit einem als eine Art Deckel ausgebildeten oberen Gehäuseteil und der Membran den für die Fraktionierung vorgesehenen Kanal. Bei der Spacerfolie handelt es sich somit um eine folienartige Zwischenlage.

Die einzelnen Komponenten übernehmen in der Kanaleinhausung jeweils eine spezifische Funktion, z.B. das Filtrieren, ein Abstandshalten, das Festlegen der Kanalgeometrie, oder auch das Abstützen der Membran. Zur Abdichtung werden diese aufeinanderliegenden Dichtungs- bzw. Trennelemente gewöhnlich miteinander verspannt. Ein Verspannen erfolgt dabei dadurch, dass eine Kraft zwischen den beiden Gehäuseteile aufgebracht wird, wobei die Kraft über die Spacerfolie geleitet wird. Auch die weiteren Komponenten können dabei gleichermaßen aufeinander gedrückt werden. Die Gehäuseteile sind bevorzugt plattenförmig ausgebildet, insbesondere auch entsprechend stabil und ggf. massiv. Häufig kann die vollständige Abdichtung aber nur dadurch sichergestellt werden, dass eine sehr hohe Spannkraft auf die übereinander angeordneten Elemente aufgebracht wird, was z.B. durch eine Vielzahl an Schrauben bewerkstelligt werden muss. Die hohe Spannkraft ist bei der Feld-Fluss-Fraktionierung oder asymmetrischen Feld-Fluss-Fraktionierung auch deshalb erforderlich, weil innerhalb der Vorrichtung, insbesondere in dem Flachkanal, ggf. ein Überdruck im Bereich von 5 bis 15 bar herrschen soll.

In Vorrichtungen für die Feld-Fluss-Fraktionierung kann bei dieser Gehäuse-Bauart zwischen einer inneren und einer äußeren Abdichtung unterschieden werden. Dabei ist bekannt, auf welche Weise beide Abdichtungen allein durch ein Verspannen von oberem und unterem Gehäuseteil sichergestellt werden können, was im Folgenden kurz am Beispiel einer Vorrichtung für die Feld-Fluss-Fraktionierung (FFF oder auch A4F) erläutert werden kann. An der Spacerfolie ist eine Abdichtung sowohl gegenüber dem oberen Gehäuseteil als auch gegenüber der Membran und dem unteren Gehäuseteil erforderlich, wobei der den ausgeschnittenen Bereich umgebende Randbereich der Spacerfolie selbst als Dichtelement zwischen dem oberen und dem unteren Gehäuseteil verwendet wird. Ferner ist auch noch eine Abdichtung zwischen der Fritte und dem unteren Gehäuseteil durch die O-Ring-Dichtung erforderlich. Als äußere Leckage wird eine Undichtigkeit bezeichnet, durch welche Fluid in die Umgebung entweichen kann. Diese äußere Leckage kann an mehreren Stellen auftreten, z.B. aufgrund einer Undichtigkeit auf der oberen und/oder unteren Seite der Spacerfolie, d.h. im Bereich zwischen dem oberen/unteren Gehäuseteil und der Spacerfolie. Als innere Leckage hingegen wird eine Undichtigkeit bezeichnet, aufgrund derer Fluid aus dem Kanal insbesondere in einem Bereich zwischen dem oberen Gehäuseteil und der Spacerfolie oder zwischen der Spacerfolie und der Membran bzw. dem unteren Gehäuseteil in das Querfluss-Volumen austreten kann, wodurch das Messergebnis verfälscht wird.

Problematisch an den vorbekannten Lösungen ist, dass selbst bei hoher zwischen oberem und unterem Gehäuseteil aufgebrachten Kraft häufig nur eine unzureichende innere oder äußere Abdichtung erzielt werden kann. Auch kann meist nicht ausgeschlossen werden, dass bei dem Zusammenbauen der Mehrzahl an aufeinander anzuordnenden Elementen sich irgendwo zwischen diesen Elementen Fremdpartikel ablagern. Dies gilt ganz besonders für die große Dichtfläche zwischen oberem Gehäuseteil und Spacerfolie bzw. zwischen Spacerfolie und unterem Gehäuseteil. Es kann auch ungünstig sein, dass die auf eine Dichtung zur inneren Abdichtung wirkende Kraft nur in Abhängigkeit der auf eine Dichtung zur äußeren Abdichtung wirkenden Kraft eingestellt werden kann. Nicht zuletzt werden bei vorbekannten Vorrichtungen vergleichsweise viele abzudichtende Bereiche gebildet, an welchen dann später jeweils die Gefahr einer Undichtheit auftreten kann. Meist ist es daher nur mit erheblichem Aufwand möglich, die richtige Ursache für eine Leckage festzustellen. Liegt z.B. eine innere Leckage vor, ist denkbar, dass Fluid in einem Bereich zwischen der Spacerfolie und dem oberen Gehäuseteil austritt, es ist aber auch denkbar, dass Fluid in einem Bereich zwischen der Spacerfolie und der Membran austritt. Es kann sogar vorkommen, dass Fluid auch noch durch ein Trägermaterial austritt, auf welchem die Membran angeordnet werden kann, z.B. um die Membran zusätzlich auf der Fritte zu stabilisieren. So muss eine bekannte Kanaleinhausung oftmals einer aufwendigen Prüfung unterzogen werden, um eine Fehleranalyse durchführen zu können und beurteilen zu können, ob und in welchem Bereich eine Undichtheit vorliegt, und in welchem Maße diese Undichtheit die Messergebnisse verfälschen könnte.

Es ist eine Aufgabe der vorliegenden Erfindung, eine Kanaleinhausung bereitzustellen, die auf einfache Weise eine sichere Abdichtung zwischen einer Membran zur Ultrafiltration und einem oberen Gehäuseteil und einem unteren Gehäuseteil sicherstellen kann. Auch ist es eine Aufgabe, eine Kanaleinhausung derart auszuführen, dass die Montage von aufeinander anzuordnenden Elementen auf einfachere Weise als bisher möglich ist. Ferner ist es eine Aufgabe, eine Kanaleinhausung konstruktiv derart auszulegen, dass die Wirkung einer bestimmten Dichtung unabhängig von bei der Montage aufgebrachten Kräften auf konstruktive Weise vorbestimmt werden kann. Nicht zuletzt ist es eine weitere Aufgabe, eine derartige Kanaleinhausung bereitzustellen, dass die Gefahr einer Beschädigung der Membran oder eines Trägermaterials bei der Montage weitgehend gebannt werden kann.

Zumindest eine der voranstehenden Aufgaben wird durch eine Kanaleinhausung der eingangs genannten Art gelöst, welche einen ersten Dichtbereich aufweist, der an dem ersten Kanalgehäuseteil vorgesehen ist und einen umlaufenden Vorsprung aufweist, der von einer vom ersten Kanalgehäuseteil definierten und im zusammengebauten Zustand eine zweite Seite des Kanals begrenzenden ersten Fläche absteht und den Kanal umgibt, wobei sich der erste Dichtbereich im zusammengebauten Zustand in dichtendem Eingriff mit der Membran befindet.

Demnach ist ein Vorsprung vorgesehen, der sich gegenüber einer von dem ersten Kanalgehäuseteil definierten ersten Fläche absetzt und im zusammengebauten Zustand insbesondere mit einer Stirnfläche durch flächenbündigen, dichtenden Kontakt an einer Oberfläche der Membran aufliegt, um durch flächigen Druck auf die Oberfläche der Membran eine innere Abdichtung zwischen dem Kanal und der Umgebung herzustellen. Der Kanal ist somit zumindest teilweise an dem ersten Kanalgehäuseteil ausgebildet.

Gemäß einem Ausführungsbeispiel kann die Kanaleinhausung so ausgebildet sein, dass der Vorsprung im zusammengebauten Zustand die Membran komprimiert. Die Kanaleinhausung kann dabei insbesondere so ausgebildet sein, dass der Vorsprung im Wesentlichen unabhängig von einem im zusammengebauten Zustand anliegenden Druck die Oberfläche um eine durch konstruktive Gestaltung vorbestimmte Eindrücktiefe komprimieren kann. Somit handelt es sich bei dem Vorsprung um eine Art geometrisch hervorstehenden Abschnitt, sei es in Form eines Absatzes, einer Stufe oder auch eines Steges oder in Form einer sonstigen gegenüber einer bzw. den benachbarten Flächen des ersten Kanalgehäuseteils konvexen Kontur.

Der Vorsprung ist also dazu vorgesehen, in dichtenden Eingriff mit der Membran gebracht zu werden, und umgrenzt den Kanal und damit das Trennvolumen. Der Kanal wird demnach durch den Vorsprung am ersten Kanalgehäuseteil definiert, und die Höhe des Vorsprungs wirkt sich in Abhängigkeit der Eindrücktiefe auf die Größe des im zusammengebauten Zustand gebildeten Trennvolumens aus. Dadurch ergibt sich zum einen der Vorteil, dass ein separates kanalbildendes Element wie die vorbekannte Spacerfolie entfallen kann und deshalb die Montage erleichtert wird. Dadurch ist es auch nicht mehr erforderlich, eine Spacerfolie genau zu positionieren, und die Gefahr einer Beschädigung der Membran bei der Montage kann weitgehend ausgeschlossen werden. Auch kann die Anzahl der abzudichtenden Bereiche reduziert werden, was sich darin zeigt, dass das erste Kanalgehäuseteil unmittelbar auf die Membran wirken kann. Die großflächigen Dichtflächen zwischen oberem Gehäuseteil und Spacerfolie bzw. Spacerfolie und unterem Gehäuseteil sind nicht mehr erforderlich. Die Gefahr, dass Verunreinigungen bei der Montage in die Kanaleinhausung bzw. in den Bereich von Abdichtungen gelangen, kann wirkungsvoll reduziert werden.

Durch den Vorsprung kann eine schmale umlaufende Dichtfläche gebildet werden. Insbesondere kann die Dichtfläche derart schmal ausgeführt sein, dass sie fast linienförmig ist, so dass bereits bei einer geringen Andrückkraft ein hoher Druck im Bereich der Dichtfläche auf die Membran ausgeübt werden kann.

Über eine Druckkraft auf den Vorsprung ist es also möglich, eine innere Abdichtung des Kanals nach innen herzustellen. Der Vorsprung kann ein abgerundetes oder an Kanten mit Fasen versehenes Querschnitts-Profil aufweisen. Im montierten Zustand drückt ein derart gestalteter Vorsprung so auf die Membranoberfläche, dass die Membran an dem Vorsprung stetig bzw. ununterbrochen anliegen kann, jedoch ein Einschneiden in die Membran nicht zu befürchten ist, selbst wenn die Membran aufgrund des umgebenden Fluids aufquellen sollte.

"innen" bzw. "nach innen" bedeutet hier zum Kanal weisend, und "außen" bzw. "nach außen" bedeutet hier in Richtung der Umgebung weisend.

Das jeweilige Kanalgehäuseteil kann plattenförmig ausgebildet sein, wobei die Kanalgehäuseteile auch als Kanalhälften bezeichnet werden können.

Gemäß einer Ausführungsform beschreibt der Vorsprung an dem ersten Kanalgehäuseteil in der Draufsicht eine Kontur in der Form eines Drachenvierecks, d.h. eines konvexen Deltoids, welches den Kanal umgrenzt. Eine Abdichtung wird also unmittelbar am Rand des Kanals an der Oberfläche der Membran in einem schmalen linienförmigen Bereich sichergestellt, und nicht etwa über einen großflächigen Bereich zwischen den beiden Kanalgehäuseteilen.

Das erste Kanalgehäuseteil kann einen einzelnen Port oder Durchlass aufweisen, welcher an dem Schnittpunkt der beiden Diagonalen des Drachenvierecks angeordnet ist. Das erste Kanalgehäuseteil kann auch drei Durchlässe aufweisen, von welchen ein Durchlass an dem Schnittpunkt der beiden Diagonalen des Drachenvierecks angeordnet ist und die beiden anderen Durchlässe zumindest annähernd im Bereich der Eckpunkte der Diagonalen des Drachenvierecks angeordnet sind, welche der Symmetrieachse des Drachenvierecks entspricht.

Gemäß einem Ausführungsbeispiel ist das erste Kanalgehäuseteil im Bereich des Kanals, abgesehen von den zuvor angesprochenen Durchlässen, als geschlossenes erstes Kanalgehäuseteil ausgeführt, welches den Kanal im zusammengebauten Zustand nach außen abgrenzt.

Außerdem kann das erste Kanalgehäuseteil direkt mit dem zweiten Kanalgehäuseteil verspannt werden, ohne dass die dabei auftretenden Kräfte in die Membran weitergeleitet werden. Dadurch kann die Dichtwirkung, insbesondere in einem Bereich einer inneren Abdichtung, unabhängig von bei der Montage aufgebrachten Kräften erzielt werden.

Gemäß einem Ausführungsbeispiel sind das erste Kanalgehäuseteil und das zweite Kanalgehäuseteil so ausgestaltet, dass sie sich im zusammengebauten Zustand zumindest abschnittsweise in direkter Anlage aneinander befinden. Somit können die Kanalgehäuseteile im zusammengebauten Zustand zumindest im Bereich einer Anlagefläche bzw. ihrer jeweiligen Anlageflächen zumindest abschnittsweise spaltfrei aneinander anliegen. Durch diese Anordnung kann verhindert werden, dass zu große Druckkräfte auf die Membran oder die Fritte wirken. Die Anlagefläche zwischen dem ersten Kanalgehäuseteil und dem zweiten Kanalgehäuseteil kann in einem Randbereich des ersten Kanalgehäuseteils bzw. des zweiten Kanalgehäuseteils gebildet sein; sie kann jedoch auch an einem äußeren Vorsprung gebildet sein, welcher außerhalb des bereits beschriebenen umlaufenden Vorsprungs angeordnet ist. Die Anlagefläche kann damit diejenige Fläche sein, über welche die im zusammengebauten Zustand herrschenden Verbindungskräfte im Wesentlichen übertragen werden, und die Kanaleinhausung kann auch dadurch kostengünstig hergestellt werden, dass lediglich im Bereich dieser Anlagefläche die Toleranzen in der Oberflächengüte und den Abmessungen einzuhalten sind, um Verspannungen zu vermeiden.

Ein äußerer Vorsprung kann an dem ersten Kanalgehäuseteil vorgesehen sein und im zusammengebauten Zustand des Kanalgehäuses in Eingriff mit einer nutartigen Ausnehmung des zweiten Kanalgehäuseteils gelangen. In diesem Fall bildet die Unterseite des äußeren Vorsprungs die Anlagefläche. Wahlweise kann die Anlagefläche auch in der nutartigen Ausnehmung selbst gebildet sein. Hierdurch ist eine einfache Zentrierung des ersten gegenüber dem zweiten Kanalgehäuseteil bei der Montage möglich, und eine Ausrichtung der Kanalgehäuseteile zueinander wird erleichtert.

Gemäß einer Ausführungsform weist das erste Kanalgehäuseteil und/oder das zweite Kanalgehäuseteil einen Anschlag auf, der gegenüber dem Kanalgehäuseteil hervorsteht, und über welchen die Anlagefläche definiert ist, wobei das erste Kanalgehäuseteil im zusammengebauten Zustand derart an dem zweiten Kanalgehäuseteil zur Anlage kommen kann, dass eine zwischen dem ersten Kanalgehäuseteil und dem zweiten Kanalgehäuseteil aufgebrachte Verbindungskraft im Wesentlichen über den Anschlag geleitet wird.

Dadurch kann unter anderem in Abhängigkeit der Anordnung der Anlagefläche, des Vorsprungs in dem ersten Dichtbereich sowie der Dicke der Membran bestimmt werden, wie stark der erste Dichtbereich im montierten Zustand die Membran komprimieren soll.

Das erste Kanalgehäuseteil und das zweite Kanalgehäuseteil können in Draufsicht eine Grundfläche mit einer Form aufweisen, welche zumindest annähernd mit der Kontur übereinstimmt, welche der äußere Vorsprung beschreibt. Die Verbindungselemente können entlang der gesamten Umfangslinie des äußeren Vorsprungs mit gleichem Abstand zueinander sowie außerhalb des äußeren Vorsprungs mit gleichem Abstand zu dem äußeren Vorsprung und auch zu dem Anschlag vorgesehen werden und dabei leicht zugänglich bleiben. Hierdurch kann sichergestellt werden, dass eine das erste Kanalgehäuseteil mit dem zweiten Kanalgehäuseteil verbindende Kraft so gleichmäßig wie möglich erzeugt und entlang des Vorsprungs verteilt werden kann, sei es bei einem Zentrieren des ersten Kanalgehäuseteils gegenüber dem zweiten Kanalgehäuseteil oder bei einem Verspannen der beiden Kanalgehäuseteile.

Gemäß einem Ausführungsbeispiel weist die Kanaleinhausung einen zweiten Dichtbereich auf, in welchem eine erste Dichtfläche an dem ersten Kanalgehäuseteil und an dem zweiten Kanalgehäuseteil eine zweite Dichtfläche vorgesehen ist, welche im zusammengebauten Zustand mit der ersten Dichtfläche zusammenwirkt, um eine dichtende Verbindung unmittelbar zwischen dem ersten und dem zweiten Kanalgehäuseteil für eine äußere Abdichtung zu erzielen. Die äußere Abdichtung kann unmittelbar zwischen den beiden Kanalgehäuseteilen oder mittels eines dazwischenliegenden Dichtelements sichergestellt werden. Gemäß einem Ausführungsbeispiel ist im zusammengebauten Zustand im zweiten Dichtbereich das Dichtelement in Form eines umlaufenden Dichtelements wie z.B. einem O-Ring vorgesehen. Das Dichtelement kann z.B. mit seinen radial nach außen und nach innen ausgerichteten Seiten an dem ersten und zweiten Kanalgehäuseteil anliegen. Der zweite Dichtbereich ist getrennt von dem ersten Dichtbereich angeordnet und beruht auf einem eigenständigen Dichtprinzip.

Gemäß einem Ausführungsbeispiel ist im zweiten Dichtbereich ein Absatz vorgesehen, an welchem zur Aufnahme eines vorzugsweise ringartigen Dichtelements die zweite Dichtfläche lateral nach außen weisend vorgesehen ist. Das Dichtelement kann im zusammengebauten Zustand jeweils an der ersten Dichtfläche sowie der zweiten Dichtfläche dichtend anliegen. Das Dichtelement kann dabei so eingebaut werden, dass die Gefahr, dass es von einer Fritte oder sonstigen Komponenten beschädigt wird, weitgehend ausgeschlossen werden kann.

Gemäß einem Ausführungsbeispiel ist der bereits erwähnte äußere Vorsprung an dem ersten Kanalgehäuseteil angeordnet, und an dem zweiten Kanalgehäuseteil ist eine nutartige Ausnehmung zur Aufnahme des äußeren Vorsprunges ausgebildet, wodurch sich auf konstruktiv besonders einfache, jedoch wirkungsvolle Weise eine definierte Ausrichtung der beiden Kanalgehäuseteile zueinander erzielen lässt.

Gemäß einem Ausführungsbeispiel ist die erste Dichtfläche durch eine innere Seitenwandung des äußeren Vorsprungs gebildet.

Erfindungsgemäß kann auch ein Kanalgehäuseteil für eine Kanaleinhausung einer Feldflussfraktionierungsvorrichtung vorgesehen sein, wobei in einem zusammengebauten Zustand das Kanalgehäuseteil auf einem weiteren Kanalgehäuseteil liegt und gemeinsam mit diesem einen, vorzugsweise als Flachkanal ausgebildeten, Kanal bildet, der an einer ersten Seite einer zwischen den beiden Kanalgehäuseteilen nach außen abgedichtet angeordneten Membran begrenzt ist und dadurch ein Trennvolumen zwischen dem Kanalgehäuseteil und der Membran bildet, wobei ein erster Dichtbereich vorgesehen ist, der einen umlaufenden Vorsprung aufweist, der von einer vom Kanalgehäuseteil definierten und im zusammengebauten Zustand eine zweite Seite des Kanals begrenzenden ersten Fläche absteht und im zusammengebauten Zustand sich in dichtendem Eingriff mit der Membran befindet und den Kanal umgibt.

Erfindungsgemäß kann das Zusammenbauen einer erfindungsgemäßen Kanaleinhausung in drei Schritten erfolgen, wobei die Kanaleinhausung aus übereinander anzuordnenden Elementen gebildet ist, insbesondere aus einem ersten Kanalgehäuseteil und einem zweiten Kanalgehäuseteil, einer Membran sowie einem Dichtelement, dadurch gekennzeichnet, dass
- in einem ersten Schritt die übereinander anzuordnenden Elemente zueinander in Position gebracht werden, wobei die Membran unmittelbar unter dem ersten Kanalgehäuseteil angeordnet wird,
- in einem zweiten Schritt das erste Kanalgehäuseteil und das zweite Kanalgehäuseteil zusammengesteckt und mittels Verbindungselementen unter Erzeugung einer ersten Kraft in Anlage aneinander gebracht werden, so dass bereits eine äußere Abdichtung über das Dichtelement nach außen gegenüber der Umgebung hergestellt werden kann, und
- in einem dritten Schritt die Verbindungselemente derart festgesetzt werden, dass das erste Kanalgehäuseteil und das zweite Kanalgehäuseteil mittels einer definierten zweiten Kraft, die größer ist als die erste Kraft, miteinander verspannt werden, so dass eine innere Abdichtung zwischen der Membran und dem ersten Kanalgehäuseteil hergestellt werden kann. Als Verbindungselemente können Schrauben vorgesehen sein, welche mit einem vorbestimmten Drehmoment angezogen werden.

In den folgenden Figuren wird die Erfindung anhand von Detailangaben zum Stand der Technik sowie weitergehenden Ausführungen zu einer bevorzugten Ausführungsform noch weiter erläutert.
- Fig. 1: zeigt eine perspektivische Seitenansicht einer vorbekannten Kanaleinhausung für einen Flachkanal in auseinandergezogener Darstellung;
- Fig. 2: zeigt in einer Schnittansicht einen Abschnitt der vorbekannten Kanaleinhausung in dem Bereich, in welchem die Spacerfolie auf der Membran aufliegt;
- Fig. 3: zeigt eine perspektivische Seitenansicht einer Kanaleinhausung gemäß einer bevorzugten Ausführungsform der Erfindung in auseinandergezogener Darstellung;
- Fig. 4: zeigt in einer perspektivischen Seitenansicht (Fig. 4a) das erste Kanalgehäuseteil sowie in einer vergrößerten auszugsweisen Darstellung (Fig. 4b) die Ausbildung eines Vorsprungs und eines äußeren Vorsprungs an dem ersten Kanalgehäuseteil gemäß der bevorzugten Ausführungsform von Figur 3;
- Fig. 5: zeigt eine Unteransicht auf das erste Kanalgehäuseteil gemäß der Ausführungsform von Fig. 3;

- Fig. 6: zeigt in einer Schnittansicht im Detail eine auszugsweise Darstellung eines ersten Dichtbereiches mit dem Vorsprung und eines zweiten Dichtbereiches an dem ersten Kanalgehäuseteil gemäß der Ausführungsform von Fig. 3;
- Fig. 7: zeigt in einer Schnittansicht eines Randabschnitts der Kanaleinhausung gemäß der bevorzugten Ausführungsform von Fig. 3 im zusammengebauten Zustand;
- Fig. 8: zeigt in schematischen Schnittansichten die Wirkungsweise eines scharfkantigen Vorsprungs (Fig. 8a bis 8c) in direktem Vergleich zu dem Dichtprinzip gemäß der bevorzugten Ausführungsform der Erfindung (Fig. 8d bis 8f); und
- Fig. 9: zeigt gemäß der bevorzugten Ausführung der Erfindung in einer vergrößerten auszugsweisen Schnittansicht den Vorsprung sowie dessen Geometrie und Anordnung in Bezug auf eine Membran.

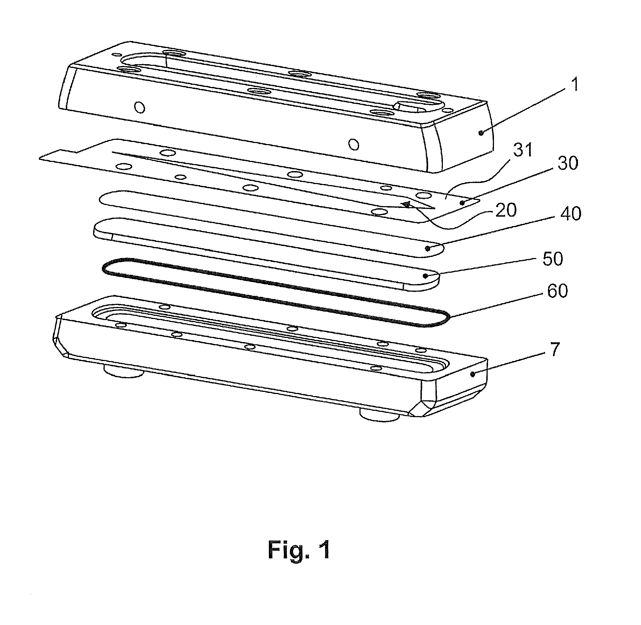

Die in der Figur 1 dargestellte Kanaleinhausung gemäß dem Stand der Technik weist ein oberes Gehäuseteil 1, eine Spacerfolie 30, eine Membran 40, eine Fritte 50, ein Dichtelement 60 sowie ein unteres Gehäuseteil 7 auf, welche umgekehrt zu dieser Reihenfolge zusammengebaut bzw. aufeinander montiert werden können. Die Spacerfolie 30 weist einen ausgeschnittenen Bereich bzw. eine Aussparung auf, die im zusammengebauten Zustand einen Kanal 20 bildet. Der Kanal 20 ist in der Fig. 1 als trapezoides, d.h. annähernd trapezförmiges Volumen erkennbar. Der Kanal 20 bildet ein Trennvolumen für die Feld-Fluss-Fraktionierung. Die Spacerfolie 30 wird bei der Montage der bekannten Kanaleinhausungen zwischen die beiden miteinander zu verschraubenden Gehäuseteile 1, 7 gelegt, wie in Fig. 1 dargestellt. Die Spacerfolie 30 liegt ferner im zusammengebauten Zustand auf der üblicherweise als Ultrafiltrationsmembran ausgebildeten Membran 40 auf, welche selbst in Einbaulage wiederum durch eine üblicherweise aus Sintermetall ausgeführte Fritte 50 gestützt ist. Die Fritte 50 liegt zusammen mit einem sie umgebenden Dichtelement 60, hier in Form eines Dichtungsrings dargestellt, auf dem unteren Gehäuseteil 7 auf.

Die aufgeführten Komponenten sind im zusammengebauten Zustand miteinander verspannt. Damit handelt es sich um eine Art Sandwich-Konstruktion, bei welcher zwischen dem oberen Gehäuseteil 1 und dem unteren Gehäuseteil 7 alle weiteren zuvor erwähnten Komponenten angeordnet sind. Durch Anziehen der zur Verbindung vorgesehenen Schrauben gelangt die Spacerfolie 30 unter Druck in dichtende Anlage sowohl an das obere Gehäuseteil 1 als auch an das untere Gehäuseteil 7. Hierzu bildet der umlaufende Randberich der Spacerfolie 30 eine beidseitige Dichtfläche 31 zur Abdichtung an dem oberen Gehäuseteil 1 und an dem unteren Gehäuseteil 7.

Während der Feld-Fluss-Fraktionierung wird ein Querfluss aus dem Kanal 20 durch die Membran 40, die Fritte 50 und dann durch eine nicht dargestellte Bohrung im unteren Gehäuseteil 7 des Gehäuses abgeleitet, während die abzutrennenden Fluidbestandteile bzw. Teilchen die Membran 40 nicht passieren können, sondern zusammen mit einem Fluidanteil im Kanal 20 verbleiben und durch einen am Ende des Kanals 20 vorgesehenen Auslass austreten. Die zur Feld-Fluss-Fraktionierung notwendigen Bedingungen erfordern dabei bevorzugt einen Druck von 5 bis 15 bar. Dichtflächen am zusammengebauten Gehäuse bzw. Kanal 20 müssen gegenüber diesem Druck beständig sein, damit weder Lösungsmittel noch Probenbestandteile austreten können. Im Leckagefall ist üblicherweise nach äußerer und innerer Leckage zu unterscheiden.

Bei äußerer Leckage tritt Flüssigkeit in die Umgebung aus, z.B. aus dem Bereich unter der Membran 40. Dies ist insbesondere bei zu schwach oder ungleichmäßig angezogenen Schrauben, beschädigtem Dichtelement 60 oder beschädigtem unteren Gehäuseteil 7 der Fall. Als Ursache kommt auch zum einen das Versagen der Abdichtung zwischen der Spacerfolie 30 und dem oberen Gehäuseteil 1 in Frage. Dieser Fall tritt vor allem dann auf, wenn Schmutzpartikel wie z.B. Staub oder Haare zwischen Dichtfläche 31 und Unterseite des oberen Gehäuseteils 1 geraten, was eine ausreichende Abdichtung über die gesamte Dichtfläche 31 verhindert. Ebenso kann aber auch eine Undichtigkeit zwischen der Spacerfolie 30 und dem unteren Gehäuseteil 7 auftreten.

Von innerer Leckage spricht man hingegen bei einer Leckage aus dem Kanal 20, die dazu führt, dass Fluid zwischen Unterseite des oberen Gehäuseteils 1 und Spacerfolie 30 oder zwischen Spacerfolie 30 und Membran 40 gelangt. Hierbei gelangt der Leckagefluss in den Fluidstrom und wird durch diesen mit abgeführt. In diesem Fall ist es besonders schwierig, die Leckage zu erkennen bzw. die Ursache der Leckage festzustellen, denn ein Austreten von Fluid an der Außenseite des Kanals 20 ist regelmäßig nicht beobachtbar. Eine solche Undichtigkeit lässt sich möglicherweise durch ein ggf. massiv geschwächtes oder gänzliches ausbleibendes Detektorsignal nur indirekt nachweisen, jedoch ist die Probe dann unwiederbringlich verloren. Der Einbau von Drucksensoren im inneren Kanalvolumen oder auch in dem Bereich in Strömungsrichtung hinter der Membran vermag eine solche Leckage durch Beobachtung des Differenzdruckes zwar anzuzeigen, bei minimaler Undichtigkeit liegt der Druckabfall jedoch meist innerhalb der Fehlertoleranz von Drucksensoren und bleibt dadurch in den meisten Fällen bei entsprechend schlechten Messergebnissen unerkannt. Ein Lecken kann also unterhalb oder oberhalb der Spacerfolie 30 auftreten.

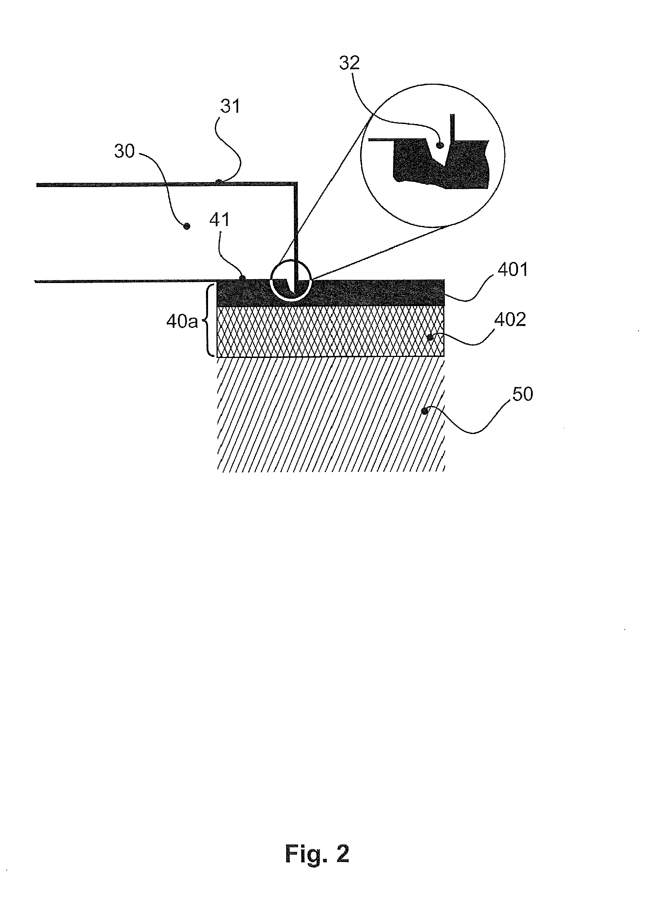

Aus Figur 2 geht hervor, dass die Membran auch als Kompositmembran 40a vorgesehen sein kann, welche aus einer Filtrationsschicht 401 und einem Trägermaterial 402 aufgebaut ist. Das Eindringen von Fluid in den Bereich zwischen der Spacerfolie 30 und der Membran 40 bzw. Filtrationsschicht 401 und/oder in den Bereich zwischen dem oberen Gehäuseteil 1 und der Spacerfolie 30 soll, wie oben beschrieben, einerseits durch die Dichtfläche 31 verhindert werden, wofür das obere Gehäuseteil 1 mit großer Spannkraft gegen das untere Gehäuseteil 7 verschraubt werden muss. Andererseits soll die Dichtwirkung unterhalb der Spacerfolie 30 mittels eines Grates 32 verbessert werden, welcher bei der Herstellung der Spacerfolie 30 entstehen kann, nämlich z.B. beim Schneiden des den Kanal 20 bildenden Ausschnitts mit einem Messer, aber auch bei modernerem Laserschneiden. Der Grat 32 wird beim Aufeinanderdrücken von oberem 1 und unterem Gehäuseteil 7 in die Filtrationsschicht 401 gedrückt und soll die Dichtwirkung in dem Bereich zwischen der Spacerfolie 30 und der Filtrationsschicht 401 dadurch unterstützen, dass er sich in die Membran 40 bzw. Filtrationsschicht 401 der Kompositmembran 40a einschneidet. Der Grat 32 ist üblicherweise nur im Bereich von wenigen zehntel Millimetern stark bzw. ausgeprägt, kann sich aber bei einer hohen zwischen den Gehäuseteilen 1, 7 aufgebrachten Spannkraft mit ganzer Tiefe in die Filtrationsschicht 401 einschneiden. Das Trägermaterial 402 des Schichtverbunds darf dabei jedoch keinesfalls verletzt werden, so dass der Grat 32 unbedingt richtig dimensioniert sein sollte.

Nachteile dieses in den Fig. 1 und 2 dargestellten Dichtprinzips ergeben sich z.B. dadurch, dass der Grat 32 als ein Nebenprodukt bei der Herstellung der Spacerfolie 30 anfällt, und dass es üblicherweise nicht gelingt, seine Form und Stärke exakt einzustellen. Insbesondere Fehlstellen oder Verdickungen, wie sie bei einer Schneidrichtungsänderung eines Lasers bzw. Messers auftreten können, führen zu einem ungleichförmigen Grat 32 und damit zum Versagen dieses Dichtprinzips. Zumindest kann die Wirkung dieses behelfsmäßigen Dichtprinzips nicht genau eingeschätzt und vorbestimmt werden. Ist der Grat 32 z.B. an einigen Stellen weniger stark ausgebildet, so würde eine ausreichende Abdichtung dort nur mit einem noch höheren Anpressdruck erzielt werden können, wohingegen der Grat 32 dann aber an einer andere Stelle bereits in das Trägermaterial 402 eindringen würde. Der Grat 32 darf also keinesfalls zu stark ausgeprägt sein, da er sich sonst in das vollkommen lösungsmittel- und probendurchlässige Trägermaterial 402 einschneidet. Anstelle einer Abdichtung wird dann eine massive Leckage hervorgerufen.

Auch ergeben sich Nachteile im Hinblick auf die für die optimale Montage erforderlichen Anforderungen bzw. Erfahrungen. Denn da die Filtrationsschicht 401 der Membran durch Benetzung mit Lösungsmittel im Bereich von 20 bis 60 µm aufquellen kann, werden die Membranen 40 vorzugsweise in nassem Zustand eingebaut, um ein zu tiefes Einschneiden des Grates 32 zu verhindern. Dies setzt beim Anwender jedoch erhöhte Vorsicht beim Umgang voraus, da nasse Membranen auf der Fritte 50 abgleiten bzw. durch Aufschwimmen unkontrolliert verrutschen können. Die exakte Position der Membran 40 bzw. Kompositmembran 40a zu halten, ohne sie jedoch zu berühren, ist bei der Montage der Kanaleinhausung von hoher Bedeutung. Berührt die Kompositmembran 40a jedoch z.B. das Dichtelement 60 (vgl. Fig. 1), so kann dieses allein dadurch schon beschädigt werden und nach außen nicht mehr ordnungsgemäß abdichten. Eine solche Beschädigung ist aber meist erst bei Inbetriebnahme realisierbar, was hohen zeitlichen Aufwand und Nachbesserungsarbeit nach sich zieht.

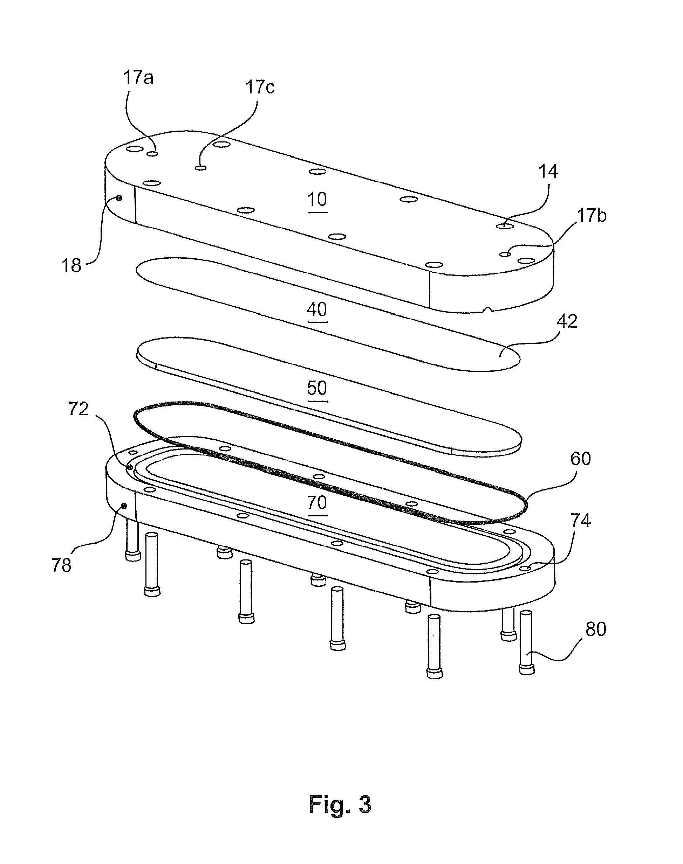

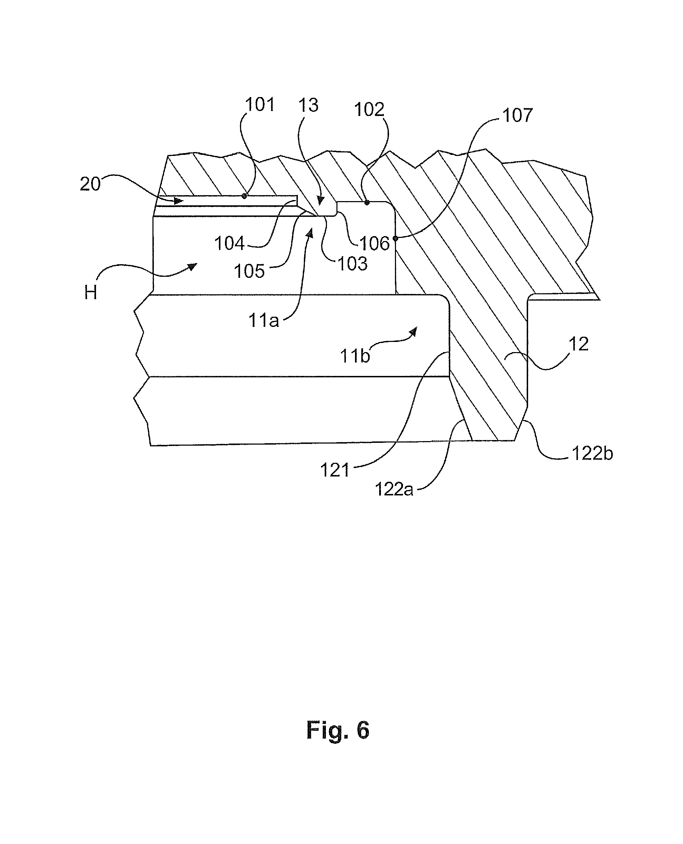

In Figur 3 ist eine bevorzugte Ausführung einer erfindungsgemäßen Kanaleinhausung dargestellt, die ein erstes Kanalgehäuseteil 10, die Membran 40, die Fritte 50, das Dichtelement 60 sowie ein zweites Kanalgehäuseteil 70 aufweist. Das erste Kanalgehäuseteil 10 liegt im montierten Zustand direkt auf einer Membranoberfläche 42 der Membran 40 auf, d.h., hier liegt keine Spacerfolie oder eine sonstige den Kanal bildende separate Komponente vor. Hingegen ist bei dem in der Fig. 3 dargestellten bevorzugten Ausführungsbeispiel der Kanal 20 im Wesentlichen durch das erste Kanalgehäuseteil 10 gebildet bzw. in das erste Kanalgehäuseteil 10 integriert (vgl. Fig. 6). Es hat sich gezeigt, dass durch die Festlegung des Kanals 20 bzw. des Trennvolumens mittels des ersten Kanalgehäuseteils 10 eine Dichtfläche bzw. ein abzudichtender Bereich entfallen kann, so dass nur noch eine innere Abdichtung zwischen erstem Kanalgehäuseteil 10 und Membran 40 sowie eine äußere Abdichtung zwischen erstem Kanalgehäuseteil 10 und zweitem Kanalgehäuseteil 70 sicherzustellen ist.

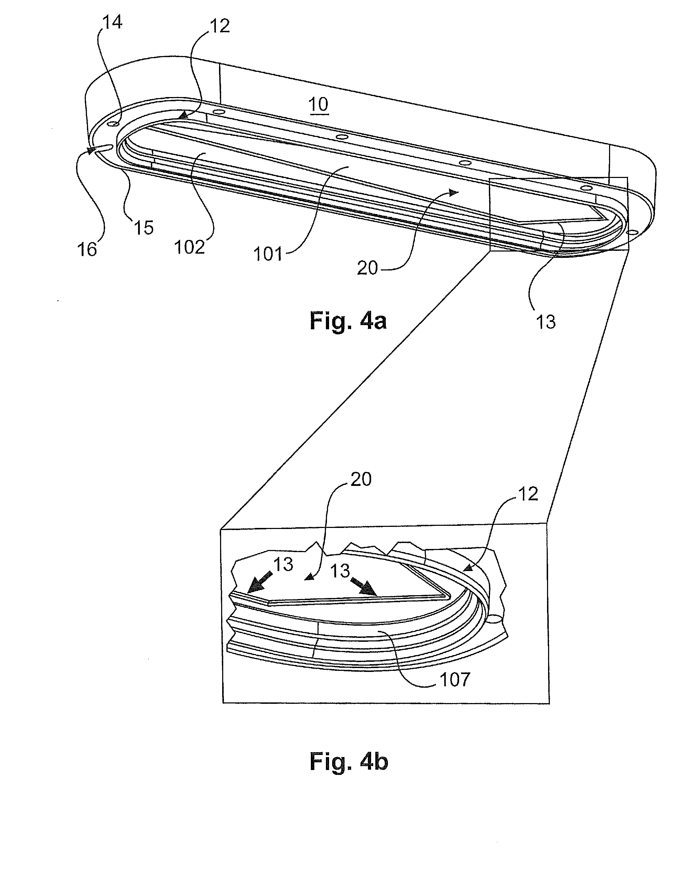

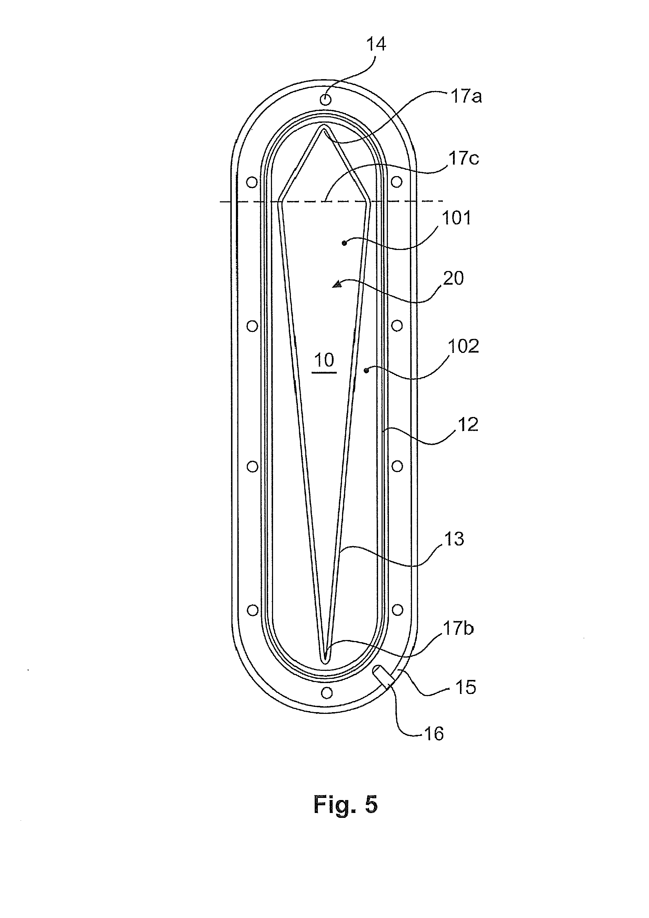

Die Figuren 4a und 4b sowie 5 zeigen das erste Kanalgehäuseteil 10 von unten und lassen den Kanal 20 erkennen, welcher von einem inneren Vorsprung 13 umgrenzt wird. Innerhalb des Vorsprunges 13 ist eine erste Fläche 101 und außerhalb des inneren Vorsprunges 13 eine zweite Fläche 102 gebildet, an welche der innere Vorsprung 13 angrenzt. In den Fig. 5, 6 und 7 ist erkennbar, dass die zweite Fläche 102 zwischen dem inneren Vorsprung 13 und einem äußeren Vorsprung 12 und in einer Ebene liegt, die zumindest annähernd parallel zu der Ebene ist, in welcher die erste Fläche 101 liegt. Der innere Vorsprung 13 setzt sich stegartig gegenüber der ersten Fläche 101 und zweiten Fläche 102 ab, wie in Fig. 6 detaillierter gezeigt. Im ersten Kanalgehäuseteil 10 sind Bohrungen 14 erkennbar, welche außerhalb eines äußeren Vorsprungs 12 entlang vom äußeren Vorsprung 12 angeordnet sind. In Fig. 5 ist gut erkennbar, dass die Bohrungen 14 zur Aufnahme von Verbindungselementen etwa in gleichem Abstand voneinander und zu dem äußeren Vorsprung 12 angeordnet sind. Außen an die Mantelfläche des ersten Kanalgehäuseteils 10 angrenzend ist ein Rand in Form eines Anschlags 15 vorgesehen, über welchen das erste 10 und das zweite Kanalgehäuseteil 70 aneinander in Anlage gelangen können. Der Anschlag 15 in dem Randbereich ist als umlaufender Steg ausgebildet, welcher hier nur im Bereich einer Aussparung 16 unterbrochen ist. Die Aussparung 16 liegt in Form einer Bohrung oder Ausfräsung vor, die vor dem äußeren Vorsprung 12 endet.

An den beiden angespitzten Enden des Kanals 20 ist im ersten Kanalgehäusteil 10 jeweils ein bohrungsartiger Durchlass vorgesehen, wie in Fig. 5 durch die Bezugszeichen "17a" und "17b" angedeutet ist. Diese Durchlässe 17a und 17b, von denen in der Regel der Durchlass 17a als Einlass-Port und der Durchlass 17b als Auslass-Port verwendet wird, sind auch in Figur 3 erkennbar gezeigt. Wie in Fig. 5 ferner durch das Bezugszeichen "17c" angedeutet ist, kann bei Bedarf im Bereich der größten Breite des Kanals 20 ein weiterer bohrungsartiger Durchlass insbesondere für die Injektion einer Probe vorgesehen sein; dieser weitere Durchlass 17c ist auch in Fig. 3 erkennbar gezeigt.

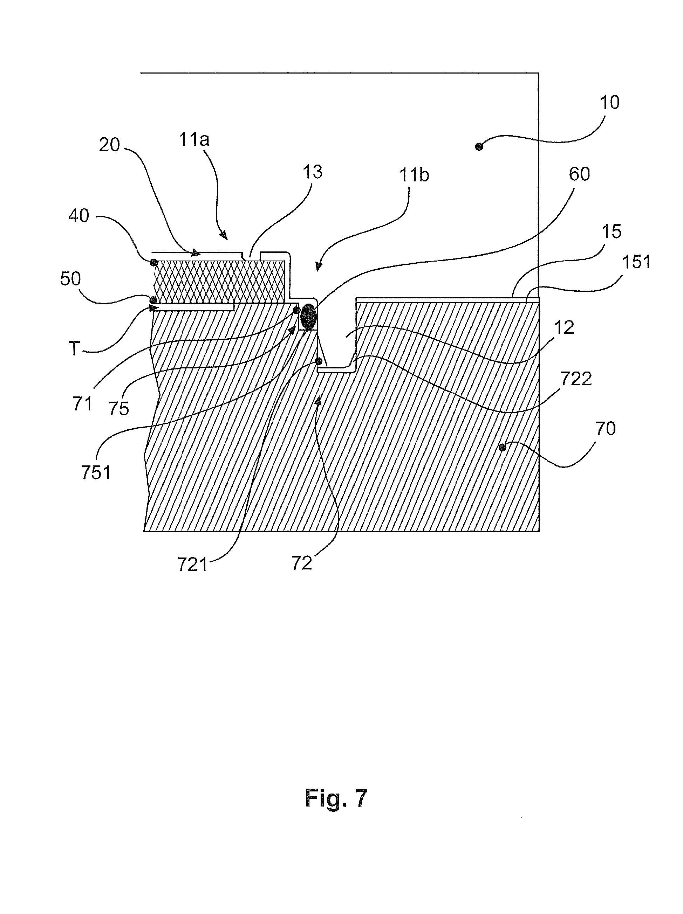

In Fig. 6 ist im Detail dargestellt, wie der äußere Vorsprung 12 bevorzugt ausgeführt ist. Der äußere Vorsprung 12 weist eine innere Fase 122a auf, welche in Richtung des Kanals 20 weist. Dadurch kann das Dichtelement 60 (vgl. Fig. 3) bei der Montage der Kanalgehäuseteile in eine exakte Lageposition gedrückt werden. Ferner weist der äußere Vorsprung 12 eine äußere Fase 122b auf, welche entgegengesetzt zur inneren Fase 122a geneigt ist. Somit verjüngt sich der äußere Vorsprung 12 zu seinem Ende hin. Durch den äußeren Vorsprung 12 wird im Wesentlichen der Zweck einer Zentrierung des ersten 10 zum zweiten Kanalgehäuseteil 70 verfolgt, jedoch bildet der äußere Vorsprung 12 zumindest teilweise auch einen zweiten Dichtbereich 11 b, in welchem ein Dichtelement 60 (vgl. Fig. 7) angeordnet werden kann.

Auch ist in Fig. 6 dargestellt, wie der innere Vorsprung 13 ausgebildet sein kann. Der Vorsprung 13 legt im Wesentlichen mit einer Druckfläche 103 sowie einer innenliegenden Fase 105 den ersten Dichtbereich 11a fest. Der erste Dichtbereich 11a ist von dem zweiten Dichtbereich 11 b beabstandet, insbesondere in einer Richtung orthogonal zu der Ebene, in welcher die Membran 40 (vgl. Fig. 7) angeordnet ist. Eine vierte Fläche 107 ist benachbart und etwa rechtwinklig zur zweiten Fläche 102 an der Unterseite des ersten Kanalgehäuseteils 10 ausgebildet. Für die Membran 40 und die Fritte 50 ist im dargestellten Ausführungsbeispiel ein Aufnahmeraum H vorgesehen, der in zusammengebautem Zustand seitlich und nach oben, wie insbesondere in Fig. 6 erkennbar ist, durch das erste Kanalgehäuseteil 10, insbesondere im Wesentlichen durch die erste Fläche 101 und die zweite Fläche 102 sowie durch die vierte Fläche 107, und, wie in Fig. 7 dargestellt, nach unten hin durch das zweite Kanalgehäuseteil 70 begrenzt wird.

In der Fig. 7 sind die Komponenten im zusammengebauten Zustand dargestellt, wobei hier der Zustand eines ersten Montageschrittes gezeigt ist, wonach das erste Kanalgehäuseteil 10 und das zweite Kanalgehäuseteil 70 noch nicht abschließend miteinander verspannt sind. Zwar ist in der Darstellung von Fig. 7 schon mittels des Dichtelementes 60 eine äußere Abdichtung in dem zweiten Dichtbereich 11b hergestellt, jedoch liegt in dem ersten Dichtbereich 11a der Vorsprung 13 nur auf der Membran 40 auf; d.h., der Vorsprung 13 berührt zwar schon die Oberfläche der Membran 40, ohne aber die Membran 40 zu komprimieren. Ferner ist erkennbar, dass durch den Anschlag 15 eine Anlagefläche 151 gebildet werden kann, welche gegenüber dem restlichen Teil der Unterseite des ersten Kanalgehäuseteils 10 hervorsteht, und welche in Bezug auf die Abmessungen des ersten Kanalgehäuseteils 10 vergleichsweise schmal ausgeführt ist, so dass hier nur eine kleine Fläche zu bearbeiten ist, um gute Toleranzwerte für eine spaltfreie Anordnung des ersten Kanalgehäuseteils 10 an dem zweiten Kanalgehäuseteil 70 zu erzielen und die Eindrücktiefe möglichst genau im Voraus festzulegen, insbesondere auf konstruktive Art.

Gemäß einer Ausführungsform kann das erste Kanalgehäuseteil 10 im zusammengebauten Zustand die Membran 40 sowie die Fritte 50 mit der als eine Art laterale Wandung ausgebildeten vierten Fläche 107 seitlich umgrenzen, so dass ein Verschieben der Membran 40 und/oder der Fritte 50 ausgeschlossen werden kann. Im montierten Zustand kann sich dabei wie dargestellt zwischen der vierten Fläche 107 und der Fritte 50 bzw. der Membran 40 ein freier Bereich ergeben, jedoch ist es auch möglich, dass die vierte Fläche 107 nahe an der Fritte 50 bzw. Membran 40 angeordnet ist oder direkt an der Fritte 50 bzw. Membran 40 zur Anlage gelangt, so dass durch das erste Kanalgehäuseteil 10 auch eine Art Zentrierung für die Fritte 50 geschaffen wird.

Während zwischen dem ersten Kanalgehäuseteil 10 und der Membran 40 durch den Kanal 20 das Trennvolumen gebildet ist, wird im Bereich der Fritte 50, auf welcher die Membran 40 angeordnet ist, bis hin zum zweiten Kanalgehäuseteil 70 ein Crossflow- bzw. Querfluss-Totvolumen T gebildet. In dem in Fig. 7 dargestellten Montage-Zustand befindet sich der äußere Vorsprung 12 bereits in einer Position, in welcher er in eine nutartige Ausnehmung 72 des zweiten Kanalge-häuseteils 70 eingreift. Die Ausnehmung 72 wird von zwei gegenüberliegenden Flächen begrenzt, nämlich einer innere Nutfläche 721 und einer äußeren Nutfläche 722, und der äußere Vorsprung 12 kann durch diese Flächen geführt bzw. zentriert werden. Das Dichtelement 60 ist an dem zweiten Kanalgehäuseteil 70 an einem Absatz 75 angeordnet. Der Absatz 75 wird von einer zweiten Dichtfläche 71, welche seitlich in Richtung nach außen zum äußeren Vorsprung 12 weist, sowie von einer Absatzfläche 751 begrenzt, auf welcher das Dichtelement 60 zur Anlage kommen kann. Eine Abdichtung kann sowohl über die zweite Dichtfläche 71 als auch über die Absatzfläche 751 erfolgen. Dies gilt ebenso für die beiden Flächen an dem ersten Kanalgehäuseteil 10, an denen das Dichtelement 60 zur Anlage kommen kann.

Zur Abdichtung der Kanaleinhausung werden in einem ersten Schritt das erste Kanalgehäuseteil 10 und das zweite Kanalgehäuseteil 70 aneinander gelegt. Dazu kann zunächst das Dichtelement 60 in den Absatz 75 an dem zweiten Kanalgehäuseteil 70 eingelegt, und daraufhin die Fritte 50 mit der Membran 40 auf dem zweiten Kanalgehäuseteil 70 angeordnet werden. Jetzt ist es nur noch erforderlich, das erste Kanalgehäuseteil 10 zu montieren, d.h., es muss gar nicht mehr eine Spacerfolie gegenüber der Membran 40 oder dem zweiten Kanalgehäuseteil 70 ausgerichtet werden. Der Zusammenbau wird also durch den äußeren Vorsprung 12 im ersten Kanalgehäuseteil 10 und die entsprechende nutartige Ausnehmung 72 im zweiten Kanalgehäuseteil 70 erleichtert, und dabei wird das erste Kanalgehäuseteil 10 gegenüber dem zweiten Kanalgehäuseteil 70 korrekt ausgerichtet. Dadurch können Relativbewegungen zwischen der Membran 40 und dem Vorsprung 13 bei der Montage weitgehend ausgeschlossen werden.

Dann werden in einem zweiten Schritt die Verbindungselemente 80 vorgesehen und die beiden Kanalgehäuseteile 10, 70 werden positioniert. Das hier Form eines O-Rings ausgeführte Dichtelement 60 sitzt nun fest zwischen den Kanalgehäuseteilen 10, 70 und bewirkt bereits bei leichtem Anziehen der Verbindungselemente 80 (vgl. Fig. 3) eine Abdichtung nach außen, d.h. eine Abdichtung in dem zweiten Dichtbereich 11b. Ein möglicherweise ungenau eingelegtes Dichtelement 60 kann dabei durch den äußeren Vorsprung 12 beim Schließen automatisch in die richtige Position gebracht werden, indem die innere Fase 122a und eine sich daran anschließende innere Seitenfläche 121 (Fig. 6) während der Montage als Führung für das Dichtelement 60 dienen, um dieses lagerichtig in den Absatz 75 zu drücken.

Erst in einem weiteren Schritt wird durch vollständiges Anziehen der Verbindungselemente 80 die Abdichtung nach innen, d.h. die Abdichtung in dem ersten Dichtbereich 11a erzielt. Dazu drückt der innere Vorsprung 13 gegen die innen liegende, dann ggf. noch trockene Membran 40. Die Abmessungen bzw. Toleranzen sind dabei so ausgelegt, dass das erste Kanalgehäuseteil 10 und das zweite Kanalgehäuseteil 70 spaltfrei über die Anlagefläche 15 aufeinander zu Anlage kommen können und die Membran 40 dabei durch den Vorsprung 13 bestimmungsgemäß komprimiert wird. Hierbei bleibt die Abdichtung nach außen unverändert bestehen. Dabei kann die Eindrücktiefe über unterschiedliche konstruktive Maßnahmen festgelegt werden, z.B. über die Höhe des Anschlags 15. Somit kann sichergestellt werden, dass die Membran 40 unabhängig von dem spezifischen Betrag einer zum Verspannen des ersten Kanalgehäuseteils 10 mit dem zweiten Kanalgehäuseteil 70 aufgebrachten Kraft keinesfalls zu stark komprimiert oder gar eingeschnitten oder durchlocht wird. Ferner ist eine optische Kontrolle möglich, denn sobald die Kanalgehäuseteile 10, 70 spaltfrei aneinander zur Anlage kommen, ist die bestimmungsgemäß Eindrücktiefe erreicht. Für den Fall dass die Verbindungselemente 80 als Schrauben ausgebildet sind, können diese mit einem Drehmomentschlüssel mit z.B. maximal 4 Nm angezogen werden. Die von den Verbindungselementen 80 ausgeübte Kraft bzw. derjenige Teil dieser Kraft, welcher nicht direkt von dem ersten 10 auf das zweite Kanalgehäuseteil 70 übertragen wird, wirkt dann nur auf einen kleinen Teil der Oberfläche der Membran 40 und wird über die dritte Fläche 103 und ggf. auch die innenliegende Fase 105 des umlaufenden Vorsprungs 13 auf die Membran 40 übertragen, so dass der Kanal 20 wirkungsvoll nach innen abgedichtet werden kann.

Die erfindungsgemäße Kanaleinhausung 1 ist dadurch leichter zusammenzubauen und kommt dabei durch das zweistufige Dichtprinzip auch mit weniger Kraft bzw. Druck aus als bisher erforderlich. Ferner können z.B. bei Membranen 40 mit unterschiedlicher Dicke auch spezifische Abstände zwischen dem ersten Kanalgehäuseteil 10 und dem zweiten Kanalgehäuseteil 70 realisiert werden, insbesondere mittels eines Distanzstücks zwischen erstem Kanalgehäuseteil 10 und zweitem Kanalgehäuseteil 70, welches z.B. im Bereich des Anschlags 15 bzw. der Anlagefläche 151 anzuordnen ist.

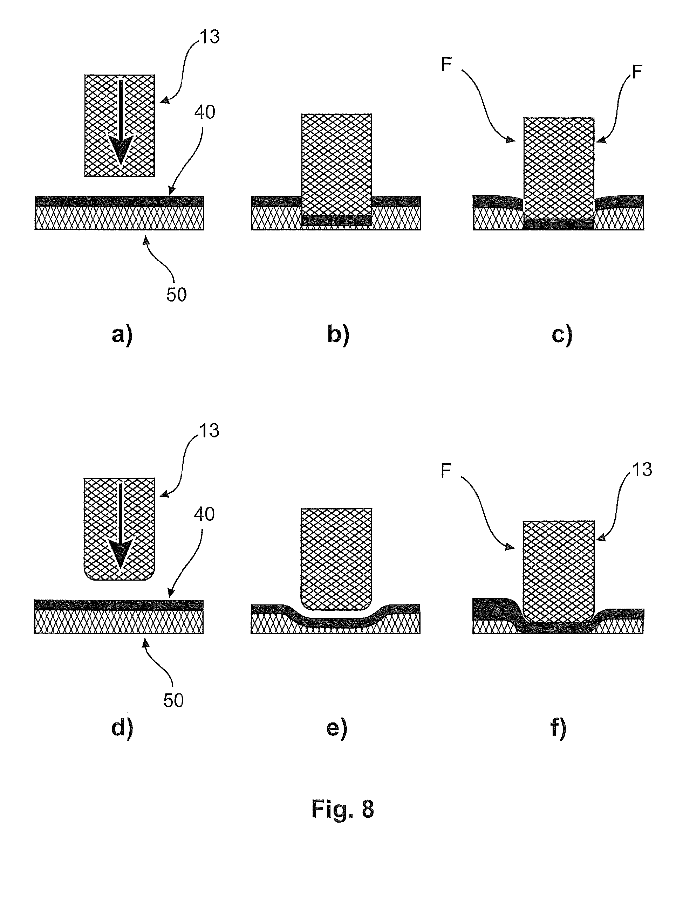

In den Figuren 8a bis 8c ist dargestellt, auf welche Weise die Membran 40 beansprucht werden könnte, falls der Vorsprung 13 scharfkantig ausgeführt würde, wie dies durch vorbekannte Kanaleinhausungen mit einem Grat an der Spacerfolie gelehrt wird. In einem solchen Fall könnte durch die Kanten des Vorsprungs 13 der eingedrückte Bereich der Membran 40 vom Rest der Membran 40 abgetrennt und im schlimmsten Fall tief in die Fritte 50 gedrückt werden, was eine innere Undichtheit zur Folge hätte. Fig. 8c lässt erkennen, dass selbst auf aufgequollener Membran 40 eine Abdichtung bei einem scharfkantigen Profil unmöglich sein könnte, so dass Fluid F beidseitig des Vorsprungs 13 auftreten würde.

In den Figuren 8d bis 8f ist im Gegensatz dazu dargestellt, was ein auf die Membran 40 ausgeübter Druck bewirkt, wenn der Vorsprung 13 erfindungsgemäß ausgestaltet ist, also zumindest nach innen eine Fase oder Rundung aufweist. Es ist erkennbar, dass die Membran 40 eingedrückt wird, ohne dass in die Membranoberfläche eingegriffen wird. Insbesondere veranschaulicht Fig. 8e, dass sich erfindungsgemäß gezeigt hat, dass durch präzises Abrunden oder Anfasen des Vorsprungs 13 entlang der Ränder seiner Druckfläche 103 eine abdichtende Kompression der Membran 40 und ggf. auch der Fritte 50 ohne Beschädigung der Membranoberfläche erreicht werden kann. Dies gilt auch für eine aufgequollene Membran 40 (vgl. Fig. 8f).

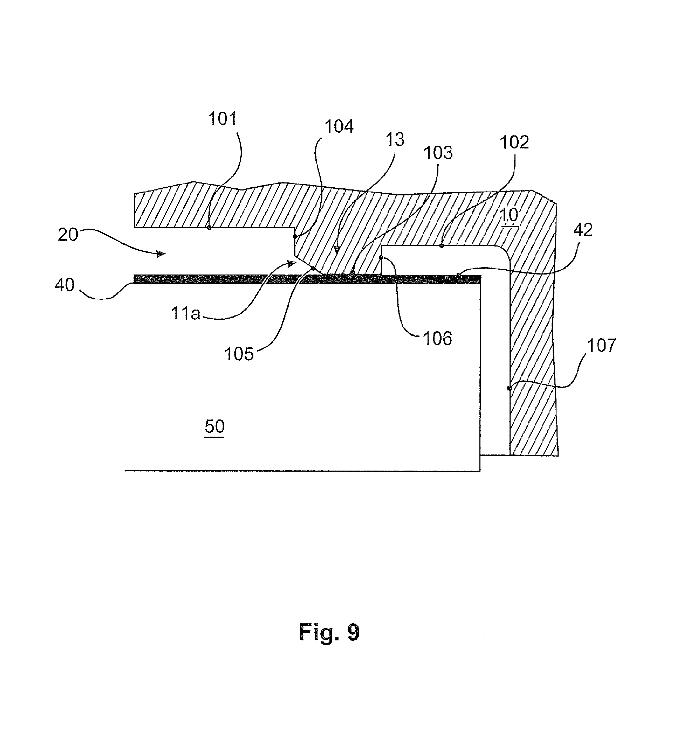

Dementsprechend ist der innere Vorsprung 13 mit einer innenliegenden Fase 105 versehen, die die für den dichtenden Eingriff mit der Membranoberfläche 42 vorgesehene dritte Fläche 103 mit einer inneren Seitenfläche 104 am inneren Vorsprung 13 verbindet, wie Fig. 9 im Detail erkennen lässt. Die ausschnittsweise Darstellung von Fig. 9 zeigt die Lage des ersten Kanalgehäuseteils 10 in Bezug auf die Membran 40 in einem vormontierten Zustand, in welchem der Vorsprung 13 die Membran 40 noch nicht spürbar eindrückt. Im fertig montierten Zustand wird demnach der erste Dichtbereicht 11 a nicht nur durch die dritte Fläche 103, sondern auch zumindest abschnittsweise durch die Fase 105 gebildet.

Wird das erste Kanalgehäuseteil 10 nun mit dem zweiten Kanalgehäuseteil 70 (vgl. Fig. 3) verspannt, so wird der Vorsprung 13, insbesondere die dritte Fläche 103, auf die Membranoberfläche 42 gedrückt, und es ergibt sich eine bestimmte Eindrücktiefe, um welche die Membranoberfläche 42 in Richtung der Fritte 50 gedrückt wird. Je nach Eindrücktiefe und Ausgestaltung bzw. Konsistenz der Membran 40 und der Fritte 50 ergibt sich hierdurch ein bestimmter Anpressdruck, durch welchen eine ausreichende innere Abdichtung des Kanals 20 gegenüber der Umgebung sichergestellt werden kann. Dabei kann bei Bedarf zusätzlich zu der Membran 40 auch die Fritte 50 um einen vorbestimmten Betrag komprimiert werden.

### Bezugszeichenliste

- 1: oberes Gehäuseteil
- 7: unteres Gehäuseteil

- 10: erstes Kanalgehäuseteil
- 101: erste Fläche
- 102: zweite Fläche
- 103: dritte Fläche (Druckfläche)
- 104: innenliegende Seitenfläche
- 105: innenliegende Fase
- 106: außenliegende Seitenfläche
- 107: vierte Fläche
- 11 a: erster Dichtbereich
- 11 b: zweiter Dichtbereich
- 12: äußerer Vorsprung (Führungskante)
- 121: (innenliegende) erste Dichtfläche
- 122a: innere Fase
- 122b: äußere Fase
- 13: Vorsprung (umlaufende Kontur)
- 14: Bohrung im ersten Kanalgehäuseteil
- 15: Anschlag (Rand)
- 151: Anlagefläche
- 16: Aussparung
- 17: Durchlass
- 18: erste Mantelfläche

- 20: Kanal

- 30: Folie
- 31: Dichtfläche zwischen Spacerfolie und oberem bzw. unterem Gehäu seteil
- 32: Grat
- 40: Membran
- 401: Filtrationsschicht
- 402: Trägermaterial
- 40a: Kompositmembran
- 41: Dichtfläche zwischen Spacerfolie und Membran
- 42: Membranoberfläche

- 50: Fritte

- 60: Dichtelement

- 70: zweites Kanalgehäuseteil
- 71: zweite Dichtfläche
- 72: nutartige Ausnehmung (Führungsnut)
- 721: innere Nutfläche
- 722: äußere Nutfläche
- 75: Absatz (Dichtungsabsatz für äußere Abdichtung)
- 751: Absatzfläche
- 78: zweite Mantelfläche

- 80: Verbindungselement

- F: Fluid
- H: Aufnahmeraum
- T: Volumen unter der Membran (Querfluss-Totvolumen)

## Patentansprüche

1. Kanaleinhausung für eine Feldflussfraktionierungsvorrichtung,
mit einem, vorzugsweise plattenförmigen, ersten Kanalgehäuseteil (10) und einem, vorzugsweise plattenförmigen, zweiten Kanalgehäuseteil (70), wobei die beiden Kanalgehäuseteile (10, 70) in einem zusammengebauten Zustand übereinander liegen und zwischen sich einen, vorzugsweise als Flachkanal ausgebildeten, Kanal (20) bilden, der an einer ersten Seite durch eine zwischen den beiden Kanalgehäuseteilen (10, 70) nach außen abgedichtet angeordneten Membran (40) begrenzt ist und dadurch ein Trennvolumen zwischen dem ersten Kanalgehäuseteil (10) und der Membran (40) festlegt,
**gekennzeichnet durch** einen ersten Dichtbereich (11a), der an dem ersten Kanalgehäuseteil (10) vorgesehen ist und einen umlaufenden Vorsprung (13) aufweist, der von einer vom ersten Kanalgehäuseteil (10) definierten und im zusammengebauten Zustand eine zweite Seite des Kanals (20) begrenzenden ersten Fläche (101) absteht und den Kanal (20) umgibt, wobei sich der erste Dichtbereich (11 a) im zusammengebauten Zustand in dichtendem Eingriff mit der Membran (40) befindet.

2. Kanaleinhausung nach Anspruch 1, wobei die Kanaleinhausung so ausgebildet ist, dass der Vorsprung (13) im zusammengebauten Zustand die Membran (40) komprimiert.

3. Kanaleinhausung nach Anspruch 1 oder 2, wobei das erste Kanalgehäuseteil (10) und das zweite Kanalgehäuseteil (70) so ausgestaltet sind, dass sie sich im zusammengebauten Zustand zumindest abschnittsweise in direkter Anlage aneinander befinden.

4. Kanaleinhausung nach mindestens einem der vorhergehenden Ansprüche, wobei der Vorsprung (13) eine innenliegende Fase (105) oder Rundung, welche nach innen zum Kanal (20) weist, und eine dritte Fläche (103) aufweist, mit welcher der Vorsprung (13) auf die Membran (40) drückt.

5. Kanaleinhausung nach mindestens einem der vorhergehenden Ansprüche, **gekennzeichnet durch** einen zweiten Dichtbereich (11b), in welchem eine erste Dichtfläche (121) an dem ersten Kanalgehäuseteil (10) und eine zweite Dichtfläche (71) an dem zweiten Kanalgehäuseteil (70) vorgesehen ist, welche im zusammengebauten Zustand mit der ersten Dichtfläche (121) zusammenwirkt, um eine dichtende Verbindung unmittelbar zwischen dem ersten (10) und dem zweiten Kanalgehäuseteil (70) für eine äußere Abdichtung zu erzielen.

6. Kanaleinhausung nach Anspruch 5, wobei im zweiten Dichtbereich (11 b) ein Absatz (75) vorgesehen ist, an welchem zur Aufnahme eines, vorzugsweise ringartigen, Dichtelements (60) die zweite Dichtfläche (71), vorzugsweise nach außen weisend, ausgebildet ist, und wobei das Dichtelement (60) im zusammengebauten Zustand jeweils an der ersten Dichtfläche (121) sowie der zweiten Dichtfläche (71) dichtend anliegt.

7. Kanaleinhausung nach mindestens einem der vorhergehenden Ansprüche, wobei außerhalb des den Kanal (20) umgebenden Vorsprungs (13) an dem ersten Kanalgehäuseteil (10) ein äußerer Vorsprung (12) angeordnet und an dem zweiten Kanalgehäuseteil (70) eine nutartige Ausnehmung (72) zur Aufnahme des äußeren Vorsprungs (12) ausgebildet ist.

8. Kanaleinhausung nach den Ansprüchen 6 und 7, wobei die erste Dichtfläche (121) durch eine innere Seitenwandung des äußeren Vorsprungs (12) gebildet ist.

9. Kanalgehäuseteil (10) für eine Kanaleinhausung einer Feldflussfraktionierungsvorrichtung, wobei in einem zusammengebauten Zustand das Kanalgehäuseteil (10) auf einem weiteren Kanalgehäuseteil (70) liegt und gemeinsam mit diesem einen, vorzugsweise als Flachkanal ausgebildeten, Kanal (20) bildet, der an einer ersten Seite einer zwischen den beiden Kanalgehäuseteilen (10, 70) nach außen abgedichtet angeordneten Membran (40) begrenzt ist und dadurch ein Trennvolumen zwischen dem Kanalgehäuseteil (10) und der Membran (40) bildet,
**gekennzeichnet durch** einen ersten Dichtbereich (11a), der einen umlaufenden Vorsprung (13) aufweist, der von einer vom Kanalgehäuseteil (10) definierten und im zusammengebauten Zustand eine zweite Seite des Kanals (20) begrenzenden ersten Fläche (101) absteht und im zusammengebauten Zustand sich in dichtendem Eingriff mit der Membran (40) befindet und den Kanal (20) umgibt.

10. Verfahren zum Zusammenbauen einer für die Feld-Fluss-Fraktionierung vorgesehenen Kanaleinhausung, wobei die Kanaleinhausung aus übereinander anzuordnenden Elementen (10, 40, 50, 60, 70) gebildet ist, insbesondere aus einem ersten Kanalgehäuseteil (10) und einem zweiten Kanalgehäuseteil (70), einer Membran (40) sowie einem Dichtelement (60), **dadurch gekennzeichnet, dass**
- in einem ersten Schritt die übereinander anzuordnenden Elemente (10, 40, 50, 60, 70) zueinander in Position gebracht werden, wobei die Membran (40) unmittelbar unter dem ersten Kanalgehäuseteil (10) angeordnet wird,
- in einem zweiten Schritt das erste Kanalgehäuseteil (10) und das zweite Kanalgehäuseteil (70) zusammengesteckt und mittels Verbindungselementen (80) unter Erzeugung einer ersten Kraft in Anlage aneinander gebracht werden, so dass bereits eine äußere Abdichtung über das Dichtelement (60) nach außen gegenüber der Umgebung hergestellt werden kann, und
- in einem dritten Schritt die Verbindungselemente (80) derart festgesetzt werden, dass das erste Kanalgehäuseteil (10) und das zweite Kanalgehäuseteil (70) mittels einer definierten zweiten Kraft, die größer ist als die erste Kraft, miteinander verspannt werden, so dass eine innere Abdichtung zwischen der Membran (40) und dem ersten Kanalgehäuseteil (10) hergestellt werden kann.
